# EUROPÄISCHE PATENTSCHRIFT

(11) **EP 1 971 473 B1**
(45) Veröffentlichungstag und Bekanntmachung des Hinweises auf die Patenterteilung: **10.11.2010**
(21) Anmeldenummer: 06841094.3
(22) Anmeldetag: 21.12.2006
(51) Int. Cl.: B29C 45/28

(54) **BETÄTIGUNGSVORRICHTUNG FÜR VERSCHLUSSNADELN IN SPRITZGIESSVORRICHTUNGEN MIT NADELVERSCHLUSSDÜSEN**
ACTUATING DEVICE FOR SHUT-OFF NEEDLES IN INJECTION MOULDING DEVICES COMPRISING NEEDLE SHUT-OFF NOZZLES
DISPOSITIF D'ACTIONNEMENT D'AIGUILLES D'OBTURATION DANS DES DISPOSITIFS DE MOULAGE PAR INJECTION COMPORTANT DES BUSES AVEC OBTURATEURS A AIGUILLES

(30) Priorität: 10.01.2006 DE 202006000373 U; 12.09.2006 DE 202006014168 U
(43) Veröffentlichungstag der Anmeldung: 24.09.2008
(73) Patentinhaber: Günther Heisskanaltechnik GmbH, 35066 Frankenberg/Eder (DE)
(72) Erfinder: GÜNTHER, Herbert, 35108 Allendorf (DE)
(74) Vertreter: Buchhold, Jürgen
(86) Internationale Anmeldenummer: PCT/EP2006/012400
(87) Internationale Veröffentlichungsnummer: WO 2007/079951

(56) Entgegenhaltungen:
- EP-A2- 1 025 974
- US-A- 5 894 023

## Beschreibung

Die Erfindung betrifft eine Betätigungsvorrichtung für Verschlussnadeln in Spritzgießwerkzeugen mit Nadelverschlussdüsen gemäß dem Oberbegriff von Anspruch 1 sowie ein Spritzgießwerkzeug nach Anspruch 18.

Nadelverschlussdüsen werden in Spritzgießwerkzeugen eingesetzt, um eine fließfähige Masse bei einer vorgebbaren Temperatur unter hohem Druck einem trennbaren Formeinsatz zuzuführen. Sie haben meist pneumatisch, hydraulisch oder elektrisch angetriebene Verschlussnadeln, die Angussöffnungen im Formeinsatz periodisch öffnen und verschließen. Jede Verschlussnadel ist hierzu im werkzeugseitigen Bereich der Spritzgießvorrichtung axialverschieblich gelagert und im düsenseitigen Bereich bevorzugt mittig durch einen Strömungskanal für die zu verarbeitende Masse hindurchgeführt. Der Strömungskanal endet in einem Düsenendstück, das eine Düsenaustrittsöffnung bildet. In Schließstellung greift das untere Ende der Verschlussnadel in einen Dichtsitz ein, der im Düsenendstück oder im Formeinsatz ausgebildet ist.

Um mehrere Nadelverschlussdüsen in einem Werkzeug synchron öffnen und schließen zu können, ist es beispielsweise aus EP-A1-0 790 116 bekannt, die Verschlussnadeln an einer gemeinsamen Trägerplatte festzulegen, welche eine Hubbewegung in Längsrichtung der Verschlussnadeln ausführt. Die Trägerplatte ist hierzu stirnseitig zwischen zwei ortsfesten Anschlägen und seitlich zwischen zwei Führungsleisten angeordnet, die innerhalb einer Aufspannplatte längsverschieblich gelagert sind und an ihren der Trägerplatte zugewandten Seitenflächen schräg angeordnete Gleitsteine oder Gleitnocken aufweisen. Letztere greifen seitlich in die Trägerplatte ein, die mit schräg verlaufenden Nuten versehen ist. Werden die Führungsleisten mittels eines Antriebs in Längsrichtung hin- und her geschoben, bewegt sich die Trägerplatte senkrecht dazu auf und ab.

Bei einem aus DE-A1-196 11 880 bekannten Spritzgießwerkzeug mit mehreren Nadelverschlussdüsen ist jede Verschlussnadel an einem separaten Nadelträgerelement befestigt. Letztere sind an zwei gegenüberliegenden Flachseiten mit schräg liegenden Führungsnocken versehen, die in schräg verlaufende Nuten eines gabelförmigen Schieberahmens eingreifen. Unterhalb der Flachseiten ist an jedem Nadelträgerelement ein zylindrischer Abschnitt ausgebildet, der in der Art eines Hubkolbens in einer Führungsbuchse axialverschieblich gelagert ist. Bewegt man den Schieberahmen hin und her, werden die einzelnen Nadelträgerelemente senkrecht dazu auf und ab bewegt.

DE-A1-199 07 116 offenbart einen zwischen zwei Werkzeugplatten ausgebildeten Betätigungsmechanismus für Druckguss-Ventilelemente, gemäß dem Oberbegriff des Anspruchs 1. Die einzelnen Ventilstifte einer Düsengruppe sind an einer gemeinsamen Ventilstiftplatte festgelegt, die randseitig mit Führungsbuchsen versehen ist und auf parallel zu den Ventilstiften verlaufenden Führungsbolzen auf- und abgleiten kann. Auf der Ventilstiftplatte sind zwei Betätigungsstäbe befestigt, die seitlich mehrere Gleitblöcke tragen. Letztere greifen in schräg verlaufende Nuten zweier Nockenelemente ein, die längsverschieblich zwischen der oberen Werkzeugplatte und je einer Halteplatte gelagert sind.

Damit sich die seitlichen Führungsleisten innerhalb der Betätigungsvorrichtung nicht verkanten, müssen alle Bauteile präzise gefertigt und stets exakt im Werkzeug positioniert werden. Dies ist insbesondere dann problematisch, wenn die Träger- oder Hubplatte relativ breit ausgebildet ist. Je weiter die Führungsleisten auseinander liegen, desto eher kann es zum Voreilen der einen oder anderen Leiste kommen. Die Bauteile verkanten sich, was zu Funktionsstörungen oder gar zu Beschädigungen führen kann. Zudem kann die Träger- bzw. Ventilstiftplatte nicht präzise auf und ab gleiten, weil die schräg angeordneten Gleitsteine oder Gleitnocken ungleichmäßig belastet werden.

Ziel der Erfindung ist es, eine kompakte Betätigungsvorrichtung für Spritzgießwerkzeuge mit Nadelverschlussdüsen zu schaffen, die alle Ventilnadeln stets synchron bewegt und mit gleicher Schließkraft beaufschlagt. Angestrebt wird insbesondere eine präzise und dauerhaft zuverlässige Führung des Schiebemechanismus, wobei der Aufbau einfach zu handhaben und kostengünstig zu realisieren sein soll.

Hauptmerkmale der Erfindung sind im kennzeichnenden Teil von Anspruch 1 angegeben.

Bei einer Betätigungsvorrichtung für Verschlussnadeln in Spritzgießwerkzeugen mit Nadelverschlussdüsen, mit wenigstens einem Hubelement, an dem wenigstens eine Verschlussnadel festlegbar sind, und mit wenigstens einem in einer ersten Richtung längsverschieblich gelagerten Betätigungselement, welches mit dem Hubelement derart gekoppelt ist, dass eine Bewegung des Betätigungselements entlang der ersten Richtung in eine Bewegung des Hubelements in einer zu der ersten Richtung quer verlaufenden zweiten Richtung umgesetzt wird, sieht die Erfindung vor, dass das entlang der ersten Richtung in einer Führungseinrichtung gleitgeführte Betätigungselement mit einer zusätzlichen Zwangsführung versehen ist.

Dadurch ist eine stets gleichmäßige und stabile Führung des Betätigungselements in der Führungseinrichtung gewährleistet. Ein Verkanten des in der ersten Richtung hin-und her zu bewegenden Betätigungselements ist damit ausgeschlossen. Die Betätigungsvorrichtung arbeitet dauerhaft präzise und zuverlässig, wobei der Aufbau einfach zu handhaben und kostengünstig zu realisieren ist.

Dazu trägt insbesondere bei, wenn die Zwangsführung parallel zur Führungseinrichtung und/oder als Linearführung ausgebildet ist. Die Bewegungskräfte werden dadurch stets parallel zur Bewegungsrichtung des Betätigungselements eingeleitet, so dass dieses stets in einer korrekten Position geführt wird.

Konstruktiv ist es günstig wenn die Zwangsführung wenigstens ein Führungselement aufweist, das in einem Lager gleitgeführt ist, wobei das Führungselement ein Rundbolzen, ein Rechteckbolzen o.dgl. ist, der in einem Lager, das als Kugelumlaufbuchse, als selbstschmierende Buchse o.dgl. ausgebildet sein kann, gleitgeführt ist.

Eine andere zweckmäßige Ausführungsform sieht vor, dass man die Zwangsführung als Flachführung ausbildet. Dies gewährleistet bei optimalen Führungseigenschaften eine nur geringe Bauhöhe, so dass sich die Betätigungsvorrichtung auch bei beengten Platzverhältnissen problemlos in einem Spritzgießwerkzeug unterbringen lässt. Das Führungselement ist dabei bevorzugt ein Flachelement, ein Blockstück, ein Gleitstein o.dgl. ist, während das Lager von zwei Führungsschienen gebildet ist, die das Führungselement gleitend aufnehmen. Eine alternative Ausführungsform sieht vor, dass das Lager ein Kugel-, Nadel- oder Rollenlager ist, was eine ebenfalls reibungsarme und präzise Führung des Flachelements gewährleistet.

Eine weitere Ausgestaltung der Erfindung sieht vor, dass das Führungselement und/oder das Lager selbstschmierend ausgebildet sind. Dadurch ist die Betätigungsvorrichtung nahezu wartungsfrei; sie gewährleistet einen dauerhaft zuverlässigen Betrieb.

Eine Weiterbildung der Erfindung sieht vor, dass das Führungselement mit dem Betätigungselement in Verbindung steht oder an diesem befestigt ist. Letzteres weist in einer vorteilhaften Ausgestaltung zwei gleitgeführte Steuerschienen auf, wobei zwischen dem Hubelement und den Steuerschienen in zu der ersten Richtung und der zweiten Richtung schräg verlaufenden Nuten wenigstens zwei Gleitelemente angeordnet sind, die eine Bewegung der Steuerschienen entlang der ersten Richtung in eine Bewegung des Hubelements in der zweiten Richtung umsetzen. Zweckmäßig ist dabei das Betätigungselement bzw. die Steuerschienen über ein Schubelement mit einem Antrieb verbunden bzw. verbindbar, so dass nur eine zentrale Antriebseinheit erforderlich ist.

Zweckmäßig ist das Führungselement an wenigstens einer Steuerschiene befestigt. Man kann diese aber auch ergänzend oder alternativ an dem Schubelement festlegen, welches die Steuerschienen mit dem Antrieb verbindet. Das gesamte Betätigungselement wird damit von der Flachführung stets präzise geführt, wobei das Führungselement mit dem Schubelement auch einstückig sein kann.

Eine besonders präzise und gleichmäßige Bewegung erreicht man, wenn das Führungselement mittig zum Schubelement angeordnet oder ausgebildet ist. Die Bewegungskräfte werden damit stets zentrisch in das Schubelement eingeleitet, was insbesondere dann von Vorteil ist, wenn die Steuerschienen symmetrisch zum Schubelement ausgebildet sind. Letztere werden exakt gleichmäßig bewegt und in der korrekten Position gehalten. Ein Voreilen der einen oder anderen Schiene ist nicht mehr möglich. Eine solche Führung führt dazu, dass die gesamte Vorrichtung stets präzise arbeitet und die Hubplatte aus jeder Position heraus gleichmäßig auf und ab bewegt werden kann. Ein Verkanten oder Verklemmen der gleitgeführten Bauteile wird wirksam vermieden.

In einer weiteren Ausführungsform können wenigstens zwei Zwangsführungen und/oder zwei Führungselemente parallel nebeneinander vorgesehen sein. Auch diese sind bevorzugt symmetrisch in der Betätigungsvorrichtung angeordnet, so dass sich die Führungspräzision und -stabilität insgesamt weiter erhöht.

Gemäß einer anderen vorteilhaften Ausführungsform der Erfindung sind an den Steuerschienen wenigstens zwei weitere Steuerschienen ankoppelbar, zwischen denen wenigstens ein weiteres Hubelement angeordnet ist. An diesem sind wenigstens zwei weitere Verschlussnadeln festlegbar, wobei das weitere Hubelement und die weiteren Steuerschienen derart gekoppelt sind, dass eine Bewegung der weiteren Steuerschienen entlang der ersten Richtung in eine Bewegung des Hubelements in der zu der ersten Richtung quer verlaufenden zweiten Richtung umgesetzt wird.

Durch die Festlegung der Ventilnadeln an den gemeinsamen Hubelementen und die Kopplung der Steuerschienen ist sichergestellt, dass alle Ventilnadeln stets synchron bewegt und mit gleicher Schließkraft beaufschlagt werden.

Die Steuerschienen sind lösbar miteinander verbunden, so dass die Erweiterungen jederzeit realisierbar und wieder rückbaubar sind. Dabei ist es von Vorteil, wenn man die Verbindung zwischen den Steuerschienen als Steck- oder Hakenverbindung ausbildet. Wichtig ist, dass zwischen den Steuerschienen entlang der ersten Richtung eine feste Verbindung besteht, damit die Hubelemente sets zuverlässig betätigt werden.

Um die Betätigungsvorrichtung und die Ventilnadeln individuell an das Werkzeug anpassen zu können, sind die Ventilnadeln entlang der zweiten Richtung relativ zu dem Hubelement justierbar ausgebildet. Um darüber hinaus eine stets synchrone Stellbewegung bei gleichzeitigem Bewegungsausgleich gewährleisten zu können, sind die Ventilnadeln gemäß einem weiteren Aspekt der Erfindung axialfest und radial schwimmend an den Hubelementen festlegbar.

Eine besondere Ausführungsform der Erfindung sieht vor, dass die Betätigungsvorrichtung in einem Spritzgießwerkzeug ausgebildet ist, insbesondere in oder an einer Aufspannplatte. Letztere ist hierzu beispielsweise mit einer Vertiefung zur Aufnahme der Betätigungsvorrichtung versehen, was die Montage vereinfacht.

Das Lager der Zwangsführung ist - ebenso wie die Führungseinrichtung - bevorzugt an oder in der Aufspannplatte ausgebildet, wobei die Führungseinrichtung von der Aufspannplatte selbst oder von wenigstens zwei Führungsschienen gebildet wird, die an oder in der Aufspannplatte befestigt sind, wobei die Steuerschienen zwischen den Führungsschienen gleitgeführt sind. Konstruktiv ist es weiter günstig, wenn das Lager der Zwangsführung im Boden der Aufspannplatte ausgebildet ist. Die Zwangsführung nimmt dadurch nur geringen Raum in Anspruch, was sich ebenfalls günstig auf die Bauhöhe der Betätigungsvorrichtung auswirkt.

Die Führungseinrichtung der Betätigungsvorrichtung weist wenigstens zwei Führungsschienen aufweist, die an oder in der Aufspannplatte befestigt sind, wobei die Steuerschienen zwischen den Führungsschienen gleitgeführt sind.

Um die Gleitreibung des Betätigungselements innerhalb der Führungseinrichtung zu reduzieren, sieht die Erfindung ferner vor, dass das Betätigungselement und/oder die Führungseinrichtung und/oder die Aufspannplatte Gleitelemente aufweisen oder tragen. Dabei handelt es sich bevorzugt um flache Gleitleisten oder Gleitplatten, die mithin wenig Platz einnehmen, was sich günstig auf die Bauhöhe auswirkt. Derartige Elemente lassen sich zudem einfach und kostengünstig fertigen, sowie rasch und bequem montieren und bei Bedarf austauschen. Besonders günstige Reibungsverhältnisse werden erzielt, wenn die Gleitelemente zumindest teilweise aus einem selbstschmierenden Material gefertigt oder zumindest teilweise damit beschichtet sind. Ergänzend oder alternativ kann man die Gleitelemente auch als Kugel-, Nadel- oder Rollenlager ausbilden oder es handelt sich um Teile solcher Lager.

Weitere wichtige Vorteile ergeben sich, wenn die Betätigungsvorrichtung bündig mit der Aufspannplatte abschließt. Die Bauhöhe des Spritzgießwerkzeugs wird dadurch nicht verändert.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine Draufsicht auf eine Ausführungsform einer Betätigungsvorrichtung für Spritzgießwerkzeuge,
- Fig. 2: eine Draufsicht auf eine andere Ausführungsform einer Betätigungsvor- richtung für Spritzgießwerkzeuge,
- Fig. 3: eine Schrägansicht einer weiteren Ausführungsform einer Betätigungsvorrich- tung für Spritzgießwerkzeuge,
- Fig. 4: die Betätigungsvorrichtung von Fig. 3 ohne Hubplatte und
- Fig. 5: eine Einzeldarstellung eines Schubelements.

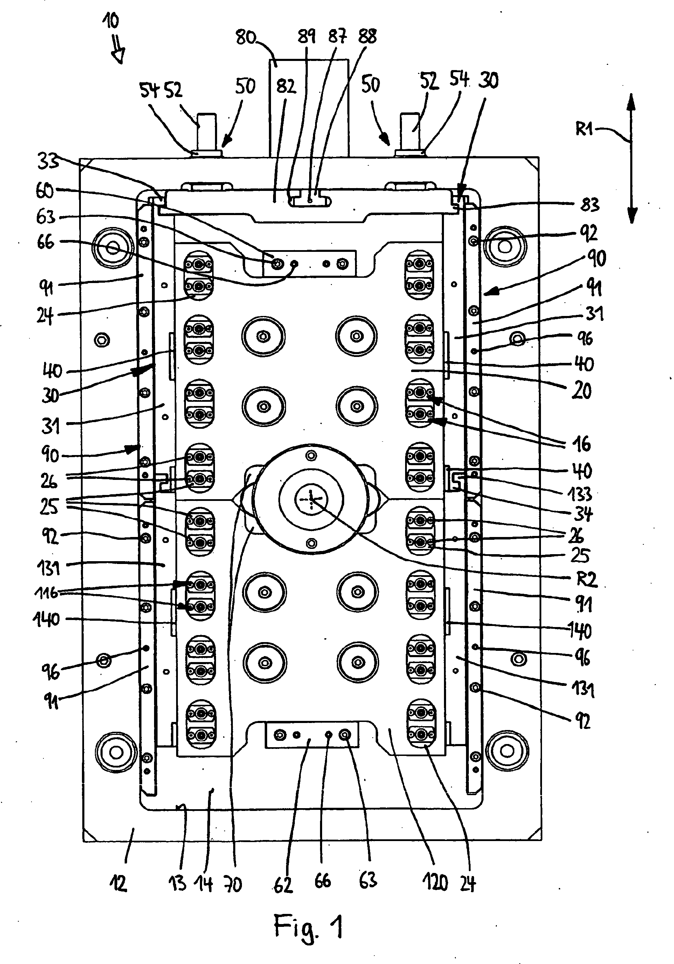

Die in Fig. 1 allgemein mit 10 bezeichnete Betätigungsvorrichtung ist für das Betätigen mehrerer Verschlussnadeln 16 in einer (nicht weiter dargestellten) Spritzgießvorrichtung vorgesehen. Letztere dient zur Herstellung von Formteilen aus einer fließfähigen Masse, beispielsweise einer Kunststoffschmelze. Hierzu sind unter einer (nicht gezeigten) Verteilerplatte mehrere (ebenfalls nicht dargestellte) Nadelverschlussdüsen angeordnet. Diese führen die zu verarbeitende Kunststoffschmelze einem trennbaren (gleichfalls nicht gezeigten) Formeinsatz zu, dessen Angussöffnungen von den Verschlussnadeln 16 periodisch geöffnet und geschlossen werden. Über der Verteilerplatte sitzt eine Aufspannplatte 12, die zur Aufnahme der Betätigungsvorrichtung 10 mit einer im Wesentlichen rechteckigen Vertiefung oder Ausnehmung 13 versehen ist.

Um die Verschlussnadeln 16 der Nadelverschlussdüsen simultan betätigen zu können, ist ein Hubelement 20 vorgesehen, an dem wenigstens zwei Verschlussnadeln 16 befestigt sind. Das Hubelement 20 ist beispielsweise als rechteckige Platte ausgebildet, die parallel zur Aufspannplatte 12 liegt und längsseits mit einem in einer ersten Richtung R1 längsverschieblich gelagerten Betätigungselement 30 gekoppelt ist, wobei eine Bewegung des Betätigungselements 30 entlang der ersten Richtung R1 in eine Bewegung des Hubelements 20 in einer zu der ersten Richtung R1 quer verlaufenden zweiten Richtung R2 umgesetzt wird. Die Hubplatte 20 trägt hierzu seitlich je zwei Gleitelemente 21, die in dem Betätigungselement 30 parallel gleitgeführt sind. Letzteres ist hierzu an seinen der Hubplatte 20 zugewandten Seitenflächen mit je zwei schräg zur Aufspannplatte 12 verlaufenden Nuten 40 versehen, weiche die Gleitelemente 21 bis auf ein geringes Bewegungsspiel aufnehmen.

Das Betätigungselement 30 wird von zwei verschieblich gelagerten Steuerschienen 31 gebildet, die zu beiden Seiten der Hubplatte 20 angeordnet sind. Letztere sitzt stirnseitig zwischen ortsfesten Anschlägen 60, 62, die mittels Schrauben 63 in der Vertiefung 13 der Aufspannplatte 12 fixiert sind. Passstifte 66 sorgen für eine präzise Ausrichtung der im Querschnitt bevorzugt rechteckigen Anschläge 60, 62, wobei die Stifte 66 fest in der Aufspannplatte 12 fixiert sind und von (nicht näher bezeichneten) Bohrungen in den Anschlägen 60, 62 passgenau aufgenommen werden.

Die Steuerschienen 31 sind innerhalb der Vertiefung 13 in einer Führungseinrichtung 90 gleitgeführt und über ein gemeinsames Schubelement 82 und ein (in Fig. 1 nicht sichtbares) Adapterstück 86 mit einem Antrieb 80 verbunden. Dieser ist bevorzugt außen an der Aufspannplatte 12 befestigt, wobei das Adapterstück durch eine (nicht dargestellte) Öffnung oder Ausnehmung stirnseitig durch die Aufspannplatte 12 hindurchgeführt ist. Der Antrieb 80 kann ein elektrischer, pneumatischer oder hydraulischer Stellantrieb oder -motor sein, der bevorzugt von einer (gleichfalls nicht gezeigten) Steuerelektronik betätigt wird. Die Verbindung zwischen dem Schubelement 82 und dem Adapterstück 86 bildet ein im Querschnitt T-förmiger Kulissenstein 88, der - ebenfalls ohne Werkzeug - formschlüssig in das Schubelement 82 eingesteckt wird. Dieses ist hierzu mit einer Aussparung 89 versehen. Zur Sicherung des Kulissensteins 88 am Adapterstück ist ein Spannstift 87 vorgesehen.

Jede Steuerschiene 31 weist antriebsseitig ein hakenförmiges Ende 33 auf, das seitlich mit dem Schubelement 82 in Eingriff bringbar sind. Letzteres hat hierzu zwei stufenförmige Enden 83, die von den senkrecht zur ersten Richtung R1 nach innen gerichteten Haken 33 der Steuerschienen 31 formschlüssig aufgenommen werden. Dadurch entsteht eine in der ersten Richtung R1 stets feste Verbindung, die senkrecht dazu lösbar ist. Die Bauteile 31, 82 des Betätigungselements 30 lassen sich mithin jederzeit rasch ein- und ausbauen, wenn beispielsweise eine längere und/oder breitere Hubplatte 20 Verwendung findet. Bei der Montage werden die Elemente 31, 82 einfach werkzeuglos ineinander gesteckt, wobei sie im Einbauzustand eine U-förmige Anordnung bilden und fest miteinander gekoppelt sind. Die Handhabung der gesamten Betätigungsvorrichtung 10 ist äußerst einfach; die Montagekosten sind gering.

Die Führungseinrichtung 90 wird entweder von der Aufspannplatte 12 oder von wenigstens zwei separaten Führungsschienen 91 gebildet. Letztere liegen seitlich in der Vertiefung 13 der Aufspannplate 12. Sie sind mittels Schrauben am Boden 14 der Vertiefung 13 befestigt und an ihren den Steuerschienen 31 zugewandten Seitenflächen mit je einer durchgehenden, parallel zur Adapterplatte 12 verlaufenden (nicht sichtbaren) Führungsnut versehen. Jede Führungsnut nimmt mit geringem Bewegungsspiel eine (ebenfalls nicht gezeichnete) Gleitleiste auf, die an einer den Führungsschienen 91 zugewandten Seitenfläche der Steuerschiene 31 ausgebildet ist.

Nicht näher bezeichnete Passstifte 96 sorgen für eine präzise Ausrichtung der Führungsschienen 91 innerhalb der Vertiefung 13. Sie sind fest im Boden 14 der Aufspannplatte 12 eingesteckt und werden von (nicht näher bezeichneten Bohrungen) in den Führungsschienen 91 passgenau aufgenommen.

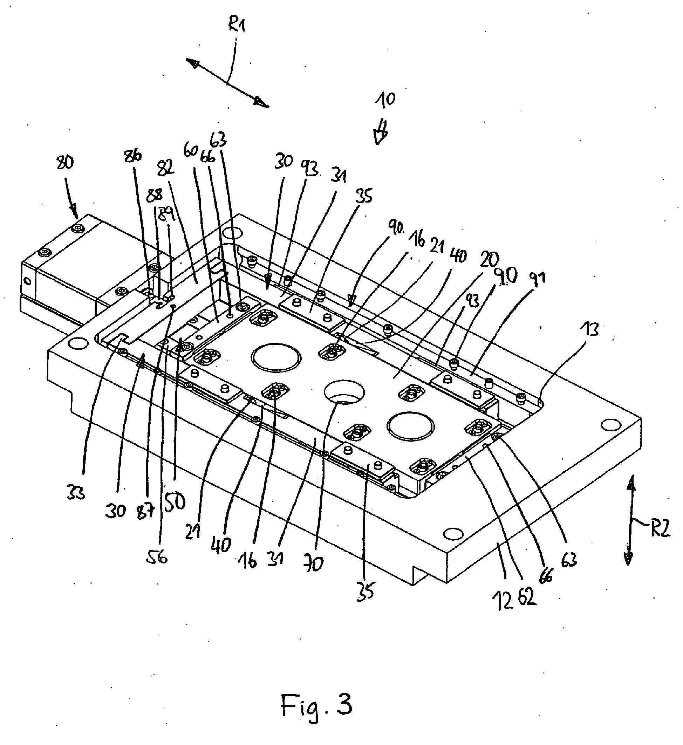

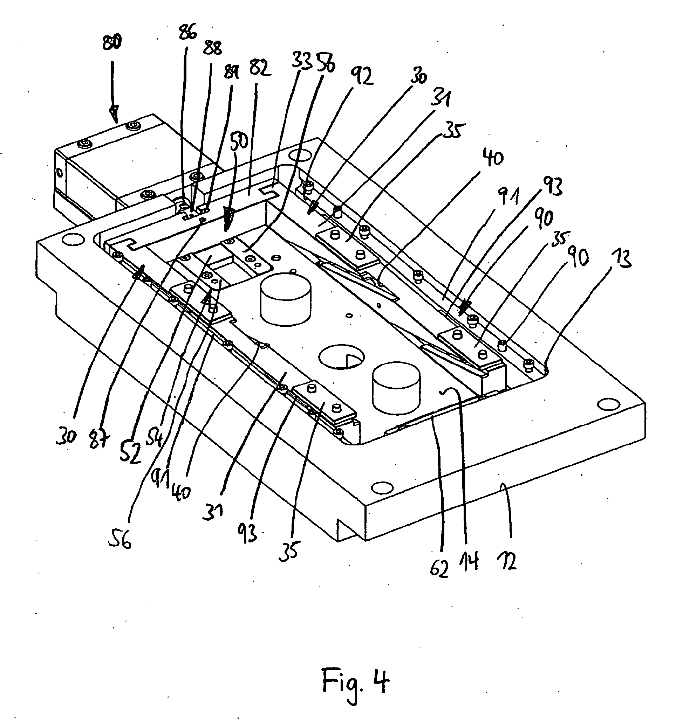

Die in Fig.3 und 4 dargestellte alternative Ausführungsform sieht vor, dass die Führungsschienen 91 an ihren den Steuerschienen 31 zugewandten Seitenflächen 92 zwei Gleitplatten 93 tragen, die vorzugsweise mit einem selbstschmierenden Material beschichtet oder aus einem solchen gefertigt sind.

Man erkennt, dass das in Richtung R1 gleitgeführte Betätigungselement 30 mit den Steuerschienen 31 und dem Schubelement 82 einen U-förmigen Steckrahmen bildet, der die Hubplatte 20 mit geringem Bewegungsspiel seitlich umfasst und der innerhalb der Führungseinrichtung 90 gleitgeführt ist. Um die Gleitreibung innerhalb der Betätigungsvorrichtung 10 weiter zu reduzieren sind die Steuerschienen 31 oben und unten mit Gleitplatten 35 versehen, die entweder aus einem selbstschmierenden Material gefertigt oder zumindest teilweise damit beschichtet sind. Die Gleitplatten 35 der Steuerschienen 31 bilden zusammen mit dem Gleitplatten 93 der Führungsschiene Gleitelemente, so dass das Betätigungselement 30 mit geringem Kraftaufwand hin und her bewegt werden kann. Ergänzend oder alternativ kann man die Gleitelemente 35, 93 auch als Gleitleisten oder als Kugel-, Nadel- oder Rollenlager ausbilden. Sie können aber auch Bestandteile Kugel-, Nadel- oder Rollenlagers sein.

Wie Fig. 1 weiter zeigt, lassen sich an den Steuerschienen 31 weitere Steuerschienen 131 ankoppeln. Zwischen diesen liegt parallel zur Aufspannplatte 12 ein weiteres Hubelement 120, das als rechteckige Platte mit gleicher Breite an die erste Hubplatte 20 anschließt und an dem weitere Verschlussnadeln 116 befestigt sind. Beide Platten 20, 120 sitzen in Längsrichtung germeinsam zwischen den ortsfesten Anschlägen 60, 62.

Zur Ankopplung der weiteren Steuerschienen 131 an die Steuerschienen 31 sind die dem Schubelement 82 abgewandten Enden 34 der Steuerschienen 31 und die dem Antrieb 80 zugewandten Enden 133 der weiteren Steuerschienen 131 ebenfalls hakenförmig ausgebildet, wobei die Hakenenden 34 der Steuerschienen 31 und die Hakenenden 133 der weiteren Steuerschienen 131 formgleich ausgebildet sind und jeweils senkrecht zur ersten Richtung R1 in die entgegengesetzte Richtung zeigen. Dabei greifen die Haken 34, 133 formschlüssig ineinander, so dass in der ersten Richtung R1 eine stets feste Verbindung entsteht, die senkrecht dazu lösbar ist.

Dadurch ist es möglich, die Steuerschienen 31, 131 über die Enden 34, 133 durch bloßes Einhaken bzw. Einstecken rasch und einfach miteinander zu verbinden. Die Betätigungsvorrichtung 10 lässt sich mithin ohne großen Aufwand jederzeit um eine weitere Hubplatten 120 erweitern, indem an die bereits vorhandenen Steuerschienen 31 weitere Steuerschienen 131 angehängt bzw. angekoppelt werden. Letztere sind über die Steuerschienen 31 und das Schubelement 82 mit dem Antrieb 80 verbunden, so dass keine zusätzliche Antriebseinheit notwendig ist. Auch dies wirkt sich äußerst günstig auf die Werkzeugkosten aus.

Die weitere Hubplatte 120 trägt - wie die Hubplatte 20 - seitlich je zwei (nicht dargestellte) Gleitelemente, die in den Steuerschienen 131 parallel gleitgeführt sind. Letztere sind dabei an ihren der Hubplatte 120 zugewandten Seitenflächen mit je zwei schräg zur Aufspannplatte 12 verlaufenden Nuten 140 versehen, welche die Gleitelemente bis auf ein geringes Bewegungsspiel aufnehmen. Die weiteren Steuerschienen 131 sind ebenfalls längsverschieblich zwischen zwei ortsfesten Führungsschienen 91 der Führungseinrichtung 90 gleitgeführt.

Bewegt der Antrieb 80 den Rahmen 30 in der ersten Richtung R1 periodisch hin- und her, werden die zwischen den Anschlägen 60, 62 zwangsgeführten Hubplatten 20, 120 von den in den Schrägnuten 40, 140 der Steuerschienen 31, 131 geführten Gleitelementen in der zweiten Richtung R2, die bevorzugt senkrecht zur Richtung R1 verläuft, auf und ab bewegt. Die mit ihren (nicht näher bezeichneten) Stirnflächen flach aneinander liegenden Hubplatten 20, 120 führen folglich zusammen mit den daran festgelegten Verschlussnadeln 16, 116 eine synchrone Hubbewegung aus, wobei alle Verschlussnadeln 16, 116 stets zeitgleich und mit gleicher Stellkraft betätigt werden.

Damit sich das U-förmige Betätigungselement 30 während des Betriebes zwischen den Hubplatten 20, 120 und der Führungseinrichtung 90 nicht verkantet, ist parallel zu den Führungsschienen 91 eine Zwangsführung 50 vorgesehen, welche das Betätigungselement 30 entlang der Richtung R1 zusätzlich führt. Die Zwangsführung 50 ist bevorzugt als Linearführung ausgebildet. Sie hat symmetrisch zu beiden Seiten des Antriebs 80 jeweils ein längliches Führungselement 52, das in einem Lager 54 zwangsgeführt ist.

Die Führungselemente 52 sind beispielsweise Rundbolzen, die mittels Schrauben 53 an dem Schubelement 82 befestigt sind. Um eine exakt senkrechte Ausrichtung der Bolzen 52 über der dem Antrieb 80 zugewandten Stirnfläche 84 des Schubelements 82 sicher zu stellen, sind in dieses (nicht näher bezeichnete) Sackbohrungen eingebracht, welche die Bolzen 52 passgenau aufnehmen. Letztere liegen stets parallel zur Richtung R1 und ragen durch die dem Antrieb 80 zugewandte Stirnseite 15 der Aufspannplatte 12 hindurch.

Jedes Lager 54 ist beispielsweise eine Kugelumlaufbuchse, die stirnseitig in die Aufspannplatte 12 eingesetzt ist und den jeweils zugeordneten Führungsbolzen 52 mit geringst möglichem Bewegungsspiel aufnimmt. Die Führungsbolzen 52 werden innerhalb der ebenfalls parallel zur Richtung R1 ausgerichteten Kugelumlaufbuchsen 54 stets exakt geführt, so dass sich der Schieberahmen 30 zwangsweise exakt in Richtung R1 bewegen muss. Ein Verkanten des Schiebers 30 gegenüber den Hubplatten 20, 120 und/oder gegenüber den Führungsschienen 91 ist damit weitestgehend ausgeschlossen. Die Betätigungseinrichtung 10 gewährleistet eine stets präzise und gleichmäßige Führung des Rahmens 30 in der Führungseinrichtung 90.

In der Ausführungsform der Fig. 3 bis 5 hat die als Linearführung ausgebildete Zwangsführung 50 mittig zum Antrieb 80 ein Führungselement 52, das in einem Lager 54 gleitgeführt ist. Letzteres wird von zwei Führungsschienen 56 gebildet, die im Boden 14 der Aufspannplatte 12 eingelassen und dort fest verschraubt sind.

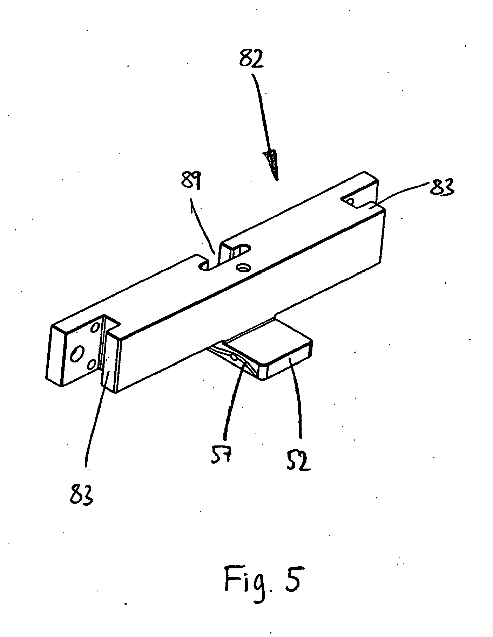

Wie insbesondere Fig. 5 zeigt, ist das Führungselement 52 als längliches Flachelement ausgebildet und einstückig mit dem Schubelement 82. Es sitzt exakt in der Mitte des Schubelements 82 und damit zentrisch zwischen den Steuerschienen 31. Seitliche Nuten 57 zu beiden Seiten des Flachelements 52 nehmen ein Schmiermittel auf, so dass die Gleitreibung innerhalb des Lagers 54 auf ein Minimum reduziert ist. Die gesamte Anordnung ist damit weitestgehend wartungsfrei.

Das Führungselement 52 ist zwischen den Führungsschienen 56 des Lagers 54 exakt geführt, d.h. das Schubelement 82 kann sich weder verkanten noch innerhalb der Vorrichtung 10 verdrehen. Dadurch ist sichergestellt, dass die symmetrisch zur Zwangsführung 50 liegenden Steuerschienen 31 stets parallel und synchron zur Richtung R1 bewegt werden. Der gesamte Schieberahmen 30 muss sich mithin zwangsweise exakt in Richtung R1 bewegen. Ein Verkanten des Schiebers 30 gegenüber der Hubplatte 20 und/oder gegenüber den Führungsschienen 91 ist damit ausgeschlossen. Die Betätigungseinrichtung 10 gewährleistet eine stets präzise und gleichmäßige Führung des Rahmens 30 in der Führungseinrichtung 90.

Damit die Hubplatten 20, 120 eine definierte und stets reproduzierbare Hubbewegung ausführen, ist die Bewegung des Schubelements 82 in der ersten Richtung R1 durch Anschläge begrenzt. Einen ersten Anschlag bildet die Aufspannplatte 12, während der dem Antrieb 80 zugewandte Anschlag 60 einen zweiten Anschlag bildet. Der Abstand zwischen der Stirnwandung 15 und dem Anschlag 60 gibt den Stellweg für das Schubelement 82 und damit für die Steuerschienen 31, 131 vor, die mithin zwischen wenigstens zwei definierten Positionen hin- und her bewegbar sind. Die Hubplatten 20, 120 führen - abhängig von der Schräglage der Nuten 40, 140 und den Gleitelementen - eine entsprechend definierte Hubbewegung aus, wobei man über den Antrieb 80 auch gezielt Zwischenpositionen anfahren kann, wenn beispielsweise die Verschlussnadeln 16, 116 in verschiedene Schließ- und Öffnungspositionen zu bringen sind.

Die lösbaren Steckverbindungen zwischen den Bauteilen 31, 82 und 82, 88 sowie 31, 131 haben den Vorteil, dass die Betätigungsvorrichtung 10 rasch und bequem von oben in der Ausnehmung 13 der Anschlagplatte 12 montiert werden kann. Lediglich die Anschläge 60, 62 sind bereits in der Vertiefung 13 eingesetzt. Die gesamte Betätigungsvorrichtung 10 besteht mithin aus nur wenigen Teilen mit einfacher Geometrie. Sie ist äußerst einfach zu montieren und jederzeit erweiterbar. Umgekehrt lassen sich die Hubelemente 20, 120, die Steuerschienen 31, 131, das Schubelement 82 und die Führungsschienen 91 jederzeit rasch und bequem aus der Aufspannplatte 12 entnehmen, um beispielsweise defekte Bauteile auszuwechseln, um die Verschlussnadeln 16, 116 wechseln zu können oder um sonstige Wartungsarbeiten durchzuführen.

Die Verschlussnadeln 16, 116 sind von oben in die Hubplatten 20, 120 eingesetzt, die hierzu mit (nicht näher bezeichneten) Bohrungen versehen sind. Im Bereich der Hubplatten 20, 120 weist jede Nadel 16, 116 endseitig ein Gewinde auf, das in eine (nicht sichtbare) im Wesentlichen rechteckige Halteplatte eingeschraubt ist. Eine (ebenfalls nicht näher bezeichnete) Justiermutter fixiert die Nadel 16, 116 gegenüber der Halteplatte, die flach auf der Hubplatte 20, 120 aufliegt. Dadurch sind die Nadeln 16, 116 entlang der zweiten Richtung R2 relativ zur Hubplatte 20, 120 individuell in der Länge verstellbar.

Jede Halteplatte liegt in einer (ebenfalls nicht gezeigten) Aussparung, deren Höhe nahezu exakt der Höhe der Halteplatte entspricht und deren Außenabmessungen größer sind als die der Halteplatte, so dass sich diese innerhalb der Aussparung radial bewegen kann. Eine mittels Schrauben 26 an der Hubplatte 20 befestigte Abdeckplatte 25 sichert die Halteplatte in der Aussparung. Die Halteplatte ist mithin in Axialrichtung der Verschlussnadeln 16, 116 mit geringstmöglichem Bewegungsspiel zwischen der Hubplatte 20, 120 und der Abdeckplatte 25 festgelegt, so dass sämtliche Nadeln 16, 116 stets präzise in Schließstellung gebracht und wieder geöffnet werden können. In Radialrichtung hingegen sind die Halteplatten schwimmend gelagert, so dass Auslenkungen der Nadeln 16, 116 innerhalb der Heißkanaldüsen ausgeglichen werden. Durch die Gestalt der Halteplatte sind die Nadeln 16, 116 zudem drehfest gegenüber der Hubplatte 20 angeordnet.

Die Nadeln 16, 116 ragen mit ihren Justiermuttem 18 durch die Abdeckplatten 25 hindurch. Damit jedoch die Nadelenden nicht zu weit über die Hubplatten 20, 120 hinausstehen, liegen die Halteplatten und die Abdeckplatten 25 in Vertiefungen 24, die von oben in die Hubplatten 20, 120 eingebracht sind. Die Bauhöhe der Betätigungsvorrichtung 10 bleibt dadurch gering.

Mittig zwischen den Vertiefungen 24 bilden die Hubplatten 20, 120 eine zentrische Ausnehmung 70 (siehe Fig. 1), die sich mit gleichem Innendurchmesser in der Aufspannplatte 12 fortsetzt. Die Ausnehmung 70 dient der Durchführung eines Strömungskanals, eines Verteilerarms o.dgl., insbesondere einer (nicht dargestellten) Maschinendüse oder einer Angussbuchse, welche die unterhalb der Aufspannplatte 12 liegende Verteilerplatte mit der zu verarbeitenden Kunststoffmasse versorgt. Der (nicht näher bezeichnete) Innendurchmesser der Ausnehmung 70 ist so bemessen, dass sich die Hubplatten 20, 120 ungehindert bewegen können. Die einzelne Hubplatte 20 hat zentrisch eine Ausnehmung 70 (siehe Fig. 3), die sich mit gleichem Innendurchmesser in der Aufspannplatte 12 fortsetzt. Auch diese Ausnehmung 70 dient der Durchführung eines Strömungskanals, eines Verteilerarms o.dgl., insbesondere einer (nicht dargestellten) Maschinendüse oder einer Angusbuchse.

Den Abschluss der Betätigungsvorrichtung 10 bildet eine (nicht dargestellte) Abdeckplatte, die flach auf den Führungsschienen 91 aufliegt und an diesen mittels (ebenfalls nicht gezeigten) Schrauben gesichert werden. Die Abdeckplatte 19 sicher sämtliche Steckverbindungen und schließt bevorzugt bündig mit der Oberseite der Aufspannplatte 12 ab, so dass die Betätigungsvorrichtung 10 nicht über die Aufspannplatte 12 hinausragt. Die Vorrichtung 10 ist vielmehr nahezu vollständig in der Aufspannplatte 12 integriert, was sich äußerst günstig auf die Bauhöhe des Werkzeugs auswirkt. Lediglich der Antrieb 80 sitzt außen an der Aufspannplatte 12, was jedoch keine Auswirkung auf deren Bauhöhe hat.

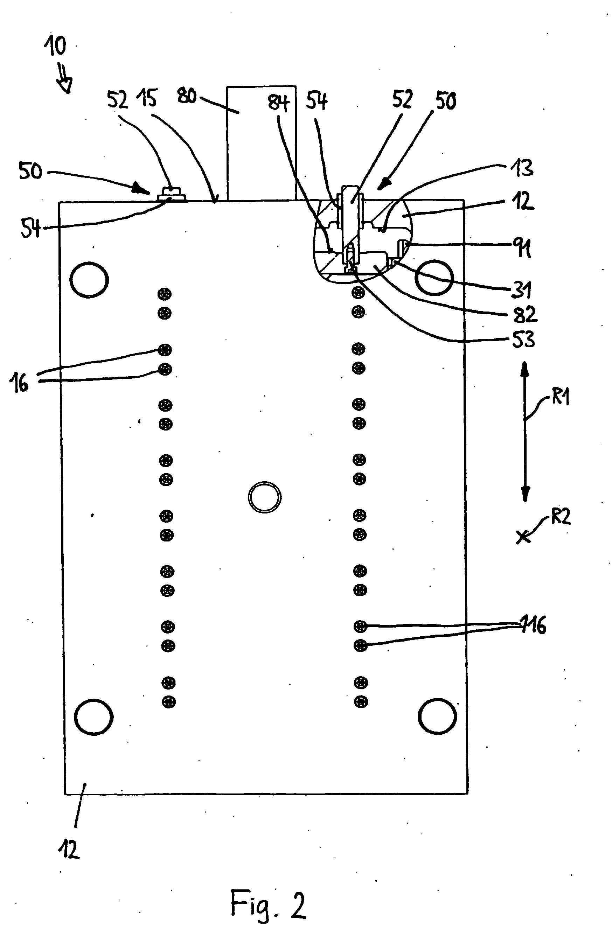

In den Ausführungsformen von Fig. 1 und 2 sind an den Hubplatten 20, 120 insgesamt zweiunddreißig Verschlussnadeln 16 befestigt. Man kann die Zahl der Verschlussnadeln 16 jedoch ohne weiteres erhöhen oder verringern, indem die Hubplatten 20, 120 entsprechend ausgebildet werden. Für eine optimale Ausnutzung der gegebenen Werkzeugfläche können mehrere Formeinsätze und damit mehrere Nadelverschlussdüsen sehr eng nebeneinander liegen.

Denkbar ist auch die Anordnung von zwei Betätigungsvorrichtungen 10 seitlich nebeneinander. Die Aufspannplatte 12 wird hierzu mit zwei nebeneinander liegenden Vertiefungen 13 oder mit einer gemeinsamen Vertiefung versehen, so dass die Steuerschienen 31, 131 und die Führungsschienen 91 der einzelnen Betätigungsvorrichtungen 10 parallel nebeneinander liegen.

Die Erfindung ist nicht auf eine der vorbeschriebenen Ausführungsformen beschränkt, sondern in vielfältiger Weise abwandelbar. So kann man das Führungselement 52 der Zwangsführung 50 alternativ oder ergänzend unmittelbar an einer Steuerschiene 31 befestigten. Es sich dabei bei Bedarf auch um einen Rechteckbolzen handeln. Das Lager 54 kann als selbstschmierende Buchse ausgebildet sein, die den Bolzen 52 passgenau und mit geringst möglichem Bewegungsspiel aufnimmt.

Die Steuerschienen 31 und das Schubelement 82 sowie die Steuerschienen 31, 131 können untereinander auch kraftschlüssig miteinander verbunden sein, beispielsweise durch (nicht gezeigte) Rastelemente. Ferner kann man die Hubelemente 20, 120 lösbar miteinander verbinden. Die Halteplatten der Verschlussnadeln 16, 116 können als Scheiben ausgebildet sein, die an zwei gegenüberliegenden Seiten abgeflacht sind.

Die dem Antrieb 80 abgewandten (nicht näher bezeichneten) Enden der weiteren Steuerschienen 131 können ebenfalls hakenförmig ausgebildet sein, um weitere Steuerschienen ankoppeln zu können. Auch diese Hakenenden sind formgleich zu den Hakenenden 33, 34, 133 ausgebildet und so gestaltet, dass in der ersten Richtung R1 eine stets zugfeste Verbindung entsteht, die senkrecht dazu lösbar ist.

### Bezugszelchenliste

- R1: ersten Richtung
- R2: zweite Richtung

- 10: Betätigungsvorrichtung
- 12: Aufspannplatte
- 13: Vertiefung / Ausnehmung
- 14: Boden
- 15: Stirnfläche
- 16: Verschlussnadel
- 17: Öffnung
- 20: Hubelement / Hubplatte
- 21: Gleitelement
- 22: Seitenfläche
- 23: Ausnehmungen
- 24: Vertiefung
- 25: Abdeckplatte
- 26: Schraube

- 30: Betätigungselement
- 31: Steuerschiene
- 33: hakenförmiges Ende
- 34: hakenförmiges Ende

- 40: Nut
- 46: Schrauben
- 47: Schrauben

- 50: Zwangsführung
- 52: Führungselement
- 54: Lager
- 56: Führungsschiene

- 57: Schraube

- 60: Anschlag
- 62: Anschlag
- 63: Schraube
- 66: Passstift
- 70: Ausnehmung

- 80: Antrieb
- 82: Schubelement
- 83: stufenförmiges Ende
- 84: Stirnfläche
- 86: Adapterstück
- 87: Spannstift
- 88: Kulissenstein
- 89: Aussparung

- 90: Führungseinrichtung
- 91: Führungsschiene
- 92: Seitenfläche
- 93: Gleit platte
- 96: Passstift

- 116: Verschlussnadel
- 120: Hubelement / Hubplatte
- 131: Steuerschiene
- 133: hakenförmiges Ende
- 140: Nut

Man kann mithin die gesamte Betätigungsvorrichtung 10 als Baukastensystem gestalten, welche mit wenigen Grundelementen 20, 30, 50, 120, 90 individuell und flexibel zusammengesetzt werden kann. Sämtliche Bauteile lassen sich durch einfaches Einhaken bzw. Einstecken rasch miteinander verbinden und bei Bedarf wieder lösen. Die Steuerschienen 31 sind dabei beidseitig mit hakenförmigen Enden versehen, was die Fertigung weiter vereinfacht. Die Betätigungsvorrichtung 10 lässt sich mithin ohne großen Aufwand jederzeit erweitern oder an einen veränderten Bedarf anpassen.

## Patentansprüche

1. Betätigungsvorrichtung (10) für Verschlussnadeln in Spritzgießwerkzeugen mit Nadelverschlussdüsen, mit wenigstens einem Hubelement (20), an dem wenigstens eine Verschlussnadel (16) festlegbar ist, und mit wenigstens einem in einer ersten Richtung (R1) längsverschieblich gelagerten Betätigungselement (30), welches mit dem Hubelement (20) derart gekoppelt ist, dass eine Bewegung des Betätigungselements (30) entlang der ersten Richtung (R1) in eine Bewegung des Hubelements (20) in einer zu der ersten Richtung (R1) quer verlaufenden zweiten Richtung (R2) umgesetzt wird und wobei das Betätigungselement (30) zwei gleitgeführte Steuerschienen (31) aufweist, wobei zwischen dem Hubelement (20) und den Steuerschienen (31) in zu der ersten Richtung (R1) und der zweiten Richtung (R2) schräg verlaufenden Nuten (40) wenigstens zwei Gleitelemente angeordnet sind, die eine Bewegung der Steuerschienen (31) entlang der ersten Richtung (R1) in eine Bewegung des Hubelements (20) in der zweiten Richtung (R2) umsetzen, **dadurch gekennzeichnet, dass** das entlang der ersten Richtung (R1) in einer Führungseinrichtung (90) gleitgeführte Betätigungselement (30) mit einer zusätzlichen Zwangsführung (50) versehen ist wobei die Zwangsführung (50) wenigstens ein Führungselement (52) aufweist, das in einem Lager (54) gleitgeführt ist, wobei das wenigstens eine Führungselement (52) mit dem Betätigungselement (30) in Verbindung steht oder an diesem befestigt ist.

2. Betätigungsvorrichtung nach Anspruch 1, **dadurch gekennzeichnet, dass** die Zwangsführung (50) parallel zur Führungseinrichtung (90) ausgebildet ist.

3. Betätigungsvorrichtung nach Anspruch 1 oder 2, **dadurch gekennzeichnet, dass** die Zwangsführung (50) eine Linearführung oder eine Flachführung ist.

4. Betätigungsvorrichtung nach einem der Ansprüche 1 bis 3, **dadurch gekennzeichnet, dass** das Führungselement (52) ein Rundbolzen, ein Rechteckbolzen o. dgl. ist oder dass das Führungselement (52), wenn die Zwangsführung (50) eine Flachführung ist, ein Flachelement, ein Blockstück, ein Gleitstein o. dgl. ist oder dass das Lager (54) eine Kugelumlaufbuchse, eine selbstschmierende Buchse o. dgl. ist oder dass das Lager (54), wenn die Zwangsführung (50) eine Flachführung ist, von zwei Führungsschienen (56) gebildet ist oder ein Kugel-, Nadel- oder Rollenlager ist.

5. Betätigungsvorrichtung nach einem der Ansprüche 1 bis 4, **dadurch gekennzeichnet, dass** das Führungselement (52) und/oder das Lager (54) selbstschmierend ausgebildet sind.

6. Betätigungsvorrichtung nach einem der Ansprüche 1 bis 5, **dadurch gekennzeichnet, dass** das Betätigungselement (30) über ein Schubelement (82) mit einem Antrieb (80) verbunden ist.

7. Betätigungsvorrichtung nach Anspruch 6, **dadurch gekennzeichnet, dass** wenigstens ein Führungselement (52) an dem Schubelement (82) befestigt ist.

8. Betätigungsvorrichtung nach Anspruch 6 oder 7, **dadurch gekennzeichnet, dass** das Führungselement (52) mit dem Schubelement (82) einstückig ist.

9. Betätigungsvorrichtung nach einem der Ansprüche 1 bis 8, **dadurch gekennzeichnet, dass** weinigstens zwei Zwangsführungen (50) und/oder zwei Führungselemente (52) parallel nebeneinander vorgesehen sind.

10. Spritzgießwerkzeug mit wenigstens einer Betätigungsvorrichtung (10) nach einem der Ansprüche 1 bis 9.

11. Spritzgießwerkzeug nach Anspruch 10, **dadurch gekennzeichnet, dass** die Betätigungsvorrichtung (10) in oder an einer Aufspannplatte (12) ausgebildet ist und/oder dass das Lager (54) der Zwangsführung (50) an oder in der Aufspannplatte (12) ausgebildet ist und/oder dass die Führungseinrichtung (90) an oder in der Aufspannplatte (12) ausgebildet ist.

12. Spritzgießwerkzeug nach Anspruch 11, **dadurch gekennzeichnet, dass** die an oder in der Aufspannplatte (12) ausgebildete Führungseinrichtung (90) der Betätigungsvorrichtung (10) von der Aufspannplatte (12) gebildet ist und/oder wenigstens zwei Führungsschienen (91) aufweist, die an oder in der Aufspannplatte (12) befestigt sind, wobei die Steuerschienen (31, 131) zwischen den Führungsschienen (91) gleitgeführt sind.

13. Spritzgießwerkzeug nach einem der Ansprüche 11 oder 12, **dadurch gekennzeichnet, dass** das Betätigungselement (30) und/oder die Führungseinrichtung (90) und/oder die Aufspannplatte (12) Gleitelemente (35, 93) aufweisen oder tragen.

14. Spritzgießwerkzeug nach Anspruch 13, **dadurch gekennzeichnet, dass** die Gleitelemente (35, 93) Gleitleisten oder Gleitplatten sind und/oder dass die Gleitelemente (35, 93) zumindest teilweise aus einem selbstschmierenden Material gefertigt oder zumindest teilweise damit beschichtet sind.

15. Spritzgießwerkzeug nach Anspruch 14, **dadurch gekennzeichnet, dass** die zumindest teilweise aus einem selbstschmierenden Material gefertigten oder zumindest teilweise damit beschichteten Gleitelemente (35, 93) Kugel-, Nadel- oder Rollenlager sind oder bilden.

## Claims

1. Operating device (10) for shut-off needles in injection moulds with needle shut-off nozzles, with at least one lifting element (20) to which at least one shut-off needle (16) is fixable, and with at least one operating element (3) positioned longitudinally movable in a first direction (R1) and that is coupled to the lifting element (20) such to transform a movement of the operating element (3) along the first direction (R1) into a movement of the lifting element (20) in a second direction (R2) running transversally to the first direction (R2), and with the operating element (30) having two slide-guided control rails (31), and where between the lifting element (20) and the control rails (31) in two grooves (40) running diagonally to the first direction (R1) and the second direction (R2) at least to slider elements are arranged to transform a movement of the control rails (31) along the first direction (R1) into a movement of the lifting element (20) in a second direction (R2), **characterized in that** the operating element slide-guided along the first direction (R1) in a guide device is equipped with an additional restraint (50), with such restraint having at least one guide element (52) slide-guided in a bearing (54), and this at least one guide element (52) being in contact with the operating element (30) or fixed to it.

2. Operating device according to Claim 1, **characterized in that** the restraint (50) is formed in parallel to the guide device (90).

3. Operating device according to Claim 1 or 2, **characterized in that** the restraint (50) is a linear guiding or a flat guiding.

4. Operating device according to one of the Claims 1 to 3, **characterized in that** the guide element (52) is a round bolt, a rectangular bolt, or similar, or that if the restraint (50) is a flat guiding, the guide element (52) is a flat element, a block piece, a sliding block, or similar, or that the bearing (54) is a recirculating ball bearing, a self-lubricating bearing, or similar, or that if the restraint (50) is a flat guiding, the bearing (54) is formed of two guide rails (56) or is a ball-, needle-, or roller bearing.

5. Operating device according to one of the Claims 1 to 4, **characterized in that** the guide element (52) and/or the bearing (54) are self-lubricating.

6. Operating device according to one of the Claims 1 to 5, **characterized in that** the operating element (30) is connected by a pusher element (82) with an actuation unit.

7. Operating device according to Claim 6, **characterized in that** at least one guide element (52) is fixed to the pusher element (82).

8. Operating device according to Claim 6 or 7, **characterized in that** the guide element (52) is forms a single piece with the pusher element (82).

9. Operating device according to one of the Claims 1 to 8, **characterized in that** at least two restraints (50) and/or two guide elements (52) are intended to be side by side in parallel.

10. Injection mould with at least one operating device (10) according to one of the Claims 1 to 9.

11. Injection mould according to Claim 10, **characterized in that** operating device (10) is formed in or on a mounting plate (12) and/or that the bearing (54) of the restraint (50) is formed on or in the mounting plate (12), and/or that the guide device (90) is formed on or in the mounting plate (12).

12. Injection mould according to Claim 11, **characterized in that** the guide device (90) of the operating device (10) formed on or in the mounting plate (12) is formed by the mounting device (12), and/or has at least two guide rails (91) fixed on or in the mounting plate (12), with the control rails (31, 131) being slide-guided between the guide rails (91).

13. Injection mould according to one of the Claims 11 or 12, **characterized in that** the operating device (30) and/or the guide device (90), and/or the mounting plate (12) have or bear slider elements (35, 93).

14. Injection mould according to Claim 13, **characterized in that** the slider elements (35, 93) are slide shoulders or slide plates, and/or that the slider elements (35, 93) are at least in part made of a self-lubricating material, or are at least partly coated with it.

15. Injection mould according to Claim 14, **characterized in that** the slider elements (35, 93) made at least in part of a self-lubricating material, or being at least in part coated with it, are or form ball-, needle-, or roller bearings.

## Revendications

1. Dispositif d'actionnement (10) d'aiguilles de fermeture dans des moules à injection avec buses à fermeture par aiguille, avec au moins un élément de levage (20) sur lequel au moins une aiguille de fermeture (16) est susceptible d'être fixée, et avec au moins un élément d'actionnement (30) logé longitudinalement mobile dans une première direction (R1) et qui est couplé à l'élément de levage (20) de telle manière qu'un mouvement de l'élément d'actionnement (30) le long de la première direction (R1) est transformé en un mouvement de l'élément de levage (20) dans une deuxième direction (R2) s'étendant en travers de la première direction (R1) et avec l'élément d'actionnement (30) ayant deux voies de came (31) coulissantes, et où entre l'élément de levage (20) et les voies de came (31) sont logés dans des rainures (40) s'étendant en inclinaison par rapport à la première direction (R1) et à la deuxième direction (R2) moins deux éléments coulissants qui transforment un mouvement des voies de came (31) le long de la première direction (R1) en un mouvement de l'élément de levage (20) dans la deuxième direction (R2), **caractérisé en ce que** l'élément d'actionnement (30) guidé à glissement dans un dispositif de guidage (90) le long de la première direction (R1) est muni d'un guidage forcé auxiliaire, cet guidage forcé ayant au moins un élément de guidage (52) logé à être guidé à glissement dans un palier (54), et que cet au moins un élément de guidage (52) est connecté à l'élément d'actionnement ou fixé à celui-ci.

2. Dispositif d'actionnement selon la Revendication 1, **caractérisé en ce que** le guidage forcé (50) est formé parallèle au dispositif de guidage (90).

3. Dispositif d'actionnement selon la Revendication 1, ou 2, **caractérisé en ce que** le guidage forcé (50) est un guidage linéaire ou un guidage plat.

4. Dispositif d'actionnement selon une des Revendications 1 à 3, **caractérisé en ce que** l'élément de guidage (52) est un boulon rond, un boulon rectangulaire, ou pareil, ou que si le guidage forcé (50) est un guidage plat, l'élément de guidage (52) est un élément plat, un bloc, un glisseur, ou pareil, ou que le palier (54) est un palier à recirculation de billes, un coussinet autolubrifiant, ou pareil, ou que, si le guidage forcé (50) est un guidage plat, le palier (54) est formé de deux glissières de guidage (56) ou est un roulement à billes, à aiguilles, ou à rouleaux.

5. Dispositif d'actionnement selon une des Revendications 1 à 4, **caractérisé en ce que** l'élément de guidage (52) et/ou le palier (54) sont formés autolubrifiants.

6. Dispositif d'actionnement selon une des Revendications 1 à 5, **caractérisé en ce que** l'élément d'actionnement (30) est relié à l'intermédiaire d'un élément de poussée (82) à un entraînement (80).

7. Dispositif d'actionnement selon la Revendication 6, **caractérisé en ce que** au moins un élément de guidage (52) est relié à l'élément de poussée (82).

8. Dispositif d'actionnement selon la Revendication 6 ou 7, **caractérisé en ce que** l'élément de guidage (52) forme avec l'élément de poussée (82) un monobloc.

9. Dispositif d'actionnement selon une des Revendications 1 à 8, **caractérisée en ce que** au moins deux guidages forcés (50) et/ou deux éléments de guidage (52) sont prévus côte à côté à la parallèle.

10. Moule à injection avec au moins un dispositif d'actionnement (10) selon une des Revendications 1 à 9.

11. Moule à injection selon la Revendication 10, **caractérisé en ce que** le dispositif d'actionnement (10) est réalisé dans ou sur un panneau de bridage (12) et/ou que le palier /54) de du guidage forcé (50) est réalisé sur ou dans ce panneau de bridage (12), et/ou que le dispositif de guidage (90) est réalisé sur ou dans le panneau de bridage (12).

12. Moule à injection selon la Revendication 11, **caractérisé en ce que** le dispositif de guidage (90) du dispositif d'actionnement (10) réalisé sur ou dans le panneau de bridage (12) est réalisé par le panneau de bridage (12) et/ou montre au moins deux glissières de guidage (91) fixées sur ou dans le panneau de bridage (12), et que les voies de came (31, 131) sont guidées à glissement entre les glissières de guidage.

13. Moule à injection selon une des Revendications 11 ou 12, **caractérisé en ce que** l'élément d'actionnement (30) et/ou le dispositif de guidage (90), et/ou le panneau de bridage (12) ont ou portent des éléments coulissants (35, 93).

14. Moule à injection selon la Revendication 13, **caractérisé en ce que** les éléments coulissants (35, 93) sont des baguettes coulissantes ou des plats coulissants, et/ou que les éléments coulissants (35, 93) sont au moins partiellement faits d'un matériel autolubrifiant ou au moins partiellement couverts de ce matériel.

15. Moule à injection selon la Revendication 14, **caractérisé en ce que** les éléments coulissants (35, 93) au moins partiellement faits d'un matériel autolubrifiant ou au moins partiellement en couverts sont ou forment des roulements à billes, à aiguilles, ou à rouleaux.
